# EUROPEAN PATENT APPLICATION

(11) **EP 3 016 345 A1**
(43) Date of publication of application: **04.05.2016**
(21) Application number: 14306712.2
(22) Date of filing: 28.10.2014
(51) Int. Cl.: H04L 29/06

(54) **Method and device for controlling a content delivery device**

(71) Applicant: ALCATEL LUCENT, 92100 Boulogne-Billancourt (FR)
(72) Inventor: Lou, Zhe, 2018 Antwerpen (BE); De Schepper, Koen, 2018 Antwerpen (BE)
(74) Representative: ALU Antw Patent Attorneys

(57) **Abstract**

Embodiments relate to a method for controlling a content delivery device (3), executed by a controlling device (4), comprising:
- receiving (T1) at least one request information message (M1) representative of requests (RQ) for content received by the content delivery device (3),
- for at least some of the requests (RQ), determining (T2) application instances (A) associated with the requests, thereby grouping requests associated with the same application instance, and
- in response to an overload indication message (M2) received (T3) from the content delivery device, selecting (T4) at least one application instance and sending (T5), to the content delivery device, a instruction message (M3) specifying the requests associated with the selected application instance.

## Description

### FIELD OF THE INVENTION

The present invention relates to the field of telecommunications. In particular, the present invention relates to methods and devices for controlling a content delivery device in a content delivery network.

### BACKGROUND

A content delivery node of a content delivery network typically receives requests for content from clients or from another content delivery node. The content delivery node retrieves the requested content either from an internal cache or from another content delivery node (which may be a content server storing a master copy of the content), and sends the retrieved content in response to the request.

The resources of the content delivery node may be limited (available memory, bandwidth, processing power...). Accordingly, a content delivery node may not be able to respond to all the requests. In case of overload, the content delivery node may limit the rate of all the content flows or sacrifice some of them by random selection. Accordingly, the Quality of Experience (QoE) is limited for all the users.

The Shared Content Addressing Protocol (SCAP) is a transport protocol which may be used by a content delivery node of a content delivery network, described in EP2173077. According to SCAP, a requested content is specified in IP and Layer 4 headers. Thus, the content delivery node does not need an application layer to process the requests. Moreover, SCAP allows specifying deadlines for the requested content. This allows scheduling of the requests, for example based on closest deadline first, and predicting an overload.

### SUMMARY

It is thus an object of embodiments of the present invention to propose methods and devices for controlling a content delivery device, which do not show the inherent shortcomings of the prior art.

Accordingly, embodiments relate to a method for controlling a content delivery device, executed by a controlling device, comprising:
- receiving at least one request information message representative of requests for content received by the content delivery device,
- for at least some of the requests, determining application instances associated with the requests, thereby grouping requests associated with the same application instance, and
- in response to an overload indication message received from the content delivery device, selecting at least one application instance and sending, to the content delivery device, a instruction message specifying the requests associated with the selected application instance.

Correspondingly, embodiments relate to a control device for controlling a content delivery device, comprising:
- a request information collecting module for receiving at least one request information message representative of requests for content received by the content delivery device,
- an application determining module for, for at least some of the requests, determining application instances associated with the requests, thereby grouping requests associated with the same application instance, and
- a overload control module for, in response to an overload indication message received from the content delivery device, selecting at least one application instance and sending, to the content delivery device, a instruction message specifying the requests associated with the selected application instance.

In some embodiments, a request specifies a content range, the application instance associated with said request being determined in function of the specified content range and description data describing the content stored on a server.

In some embodiments, a request specifies a timing constrain, the application instance associated with said request being determined in function of the specified timing constrain.

The content range and/or the timing constrain may be specified in a layer 4 header or in a URL.

In some embodiments, selecting at least one application instance comprises selecting in function of the durations of non-interrupted transmission of flows associated with said application instances.

In some embodiments, selecting at least one application instance comprises selecting in function of the number of transmission interruptions of flows associated with said application instances.

Other embodiments relate to a method for transmission of content, executed by a content delivery device, comprising:
- receiving requests for content from clients,
- sending at least one request information message representative of received requests RQ to a controlling device,
- in case of determining or predicting insufficient resources for processing the requests, sending a overload indication message to the controlling device,
- receiving, from the controlling device, an instruction message specifying a list of requests,
- limiting the bandwidth of or stopping response flows associated with the requests of said list.

Correspondingly, embodiments relate to a content delivery device comprising:
- means for receiving requests for content from clients,
- means for sending at least one request information message representative of received requests RQ to a controlling device,
- means for, in case of determining or predicting insufficient resources for processing the requests, sending a overload indication message to the controlling device,
- means for receiving, from the controlling device, an instruction message specifying a list of requests,
- means for limiting the bandwidth of or stopping response flows associated with the requests of said list.

Embodiments also relate to a computer program comprising instructions for performing one of the methods mentioned before when said instructions are executed by a computer.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a block diagram of a system for transmission of content in a network,
Figure 2 is a flowchart of a method for transmission of content, executed by the content delivery device of Figure 1,
Figure 3 is a flowchart of a method for controlling the content delivery device, executed by the controlling device of Figure 1, and
Figure 4 is a structural block diagram of the content delivery device or the controlling device.

### DESCRIPTION OF EMBODIMENTS

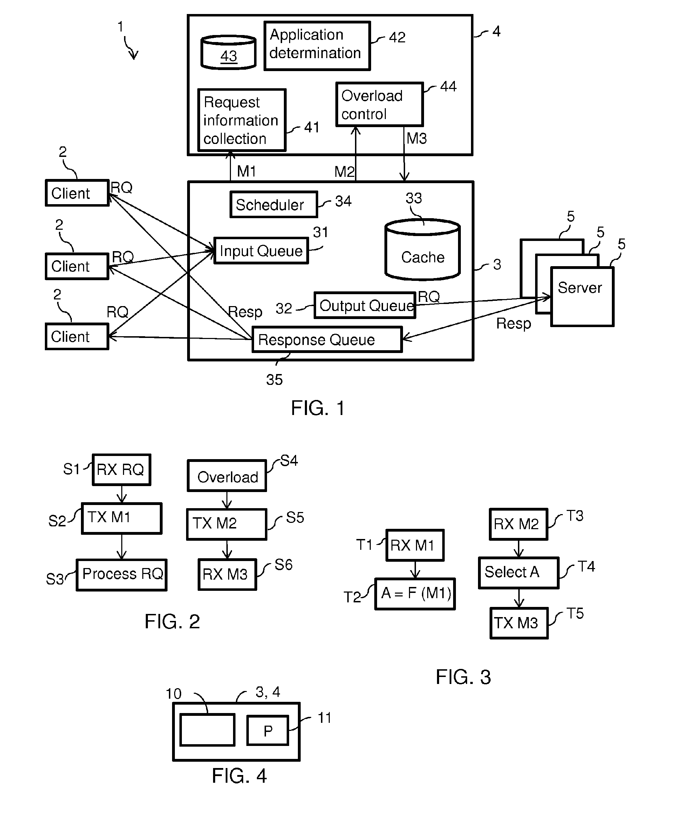

**Figure 1** shows a system 1 for transmission of content in a network. The system 1 comprises clients 2, a content delivery device 3, a controlling device 4 and one or more content servers 5.

The clients 2 run application instances which may use content available from the servers 5. Accordingly, a client 2 may obtain content from a server 5 by sending a request RQ to the server 5, and receiving a response Resp containing the requested content. In the context of an IP network, a request RQ is typically a short message which comprises one IP packet. In contrast, a response Resp, which includes content data, is typically a longer message which comprises a flow of IP packets. A client 2 may run more than one application instances, and an application instance may request one or more content in sequence and/or in parallel.

A server 5 stores contents and, in response to a request RQ, sends a response Resp (a flow) containing the requested content.

A request RQ may be a message according to the Shared Content Adressing Protocol (SCAP). SCAP allows requesting content by specifying a range of bytes on a server 5 and timing constrain for delivery of the content. A SCAP request RQ includes an IP header which comprises the IP address of the server 5 storing the requested content, and a Layer 4 header which comprises a request ID, a content address specifying the first byte of the requested content, a content size, a start byte deadline and an end byte deadline.

In another embodiment, a request RQ may be a TCP/IP message wherein the requested content, and in some cases a timing constrain, is specified by an URL.

The content delivery device 3 functions as an intermediary node between the clients 2 and the servers 5, and may cache content to improve the efficiency of content transmission in the network. Accordingly, the content delivery device 3 receives the requests RQ from the clients 2, retrieves the requested content either from an internal cache 33 and/or by sending a corresponding request RQ to the server 5, and sends a response Resp including the retrieved content to the client 2.

In the illustrated example, the content delivery device 3 comprises a input request queue 31, an output request queue 32, a cache 33, a scheduler 34 and a response queue 35.

The input request queue 31 stores requests RQ received from clients 2 for processing. Processing a request RQ of the input request queue 31 may comprises retrieving the requested content from the cache 33 and/or by adding a corresponding request RQ in the output request queue 32, which buffers requests RQ to be sent to the server 5.

The cache 33 may store content obtained from the servers 5. The response queue 35 buffers the content flows before sending them to the clients 2.

The scheduler 34 manages the input request queue 31, the output request queue 32 and/or the response queue 35. For example, in case the request RQ specifying timing constrains, the scheduler 34 may prioritize the requests and responses based on closest deadline.

The resources of the content delivery device 3 are limited (available memory, bandwidth, processing power...). Accordingly, the content delivery device 3 may not be able to respond to all the requests RQ received from clients 2. In case of requests RQ specifying timing constrains, the scheduler 34 may predict an overload in advance. In the system 1, the content delivery device 3 interacts with the control device 4 to determine flows that should be impacted in case of overload. Impacting a flow may comprise limiting the flow rate and/or stopping the flow.

Although Figure 1 shows the content delivery device 3 as the only intermediary node between the clients 2 and the servers 5, the system 1 may comprise more than one intermediary nodes. Accordingly, requests RQ from clients 2 received by the content delivery device 3 may come from another intermediary node, and requests RQ sent by the content delivery device 3 to the server 5 may be processed by another intermediary node.

The controlling device 4 comprises a request information collecting module 41, an application determination module 42 and a overload controlling module 44.

The request information collecting module 41 receives request information messages M1 representative of the requests RQ received by the content delivery device 3. In a simple example, for each received request RQ, the content delivery device 3 sends a request information message M1, which is a copy of the request RQ, to the controlling device 4. In another example, in order to limit bandwidth consumption between the content delivery node 3 and the controlling device 4, only some of the requests RQ are reported.

For example, in SCAP, a request RQ may be a request for a new flow or a request for updating a previous request. These types of request are reported to the controlling device 4. However, in SCAP, a pending request needs to be refreshed by sending the request message again (with shorter deadlines as much as time has gone by), or the request will time out. Also, if data is send, the request message is send too with an advanced starting address as much as the data is received (this is actually the acknowledgement of data received). For such refresh request or acknowledgment request, no transmission to the controlling device 4 is needed.

Also, the request information collecting module 41 may classify the flows as important or not important, based on a classification policy. The controlling device 4 inform the content delivery device 3 of the classification and the content delivery device 3 does not send more request information messages M1 associated with not important flows.

The application determination module 42 determines application instances associated with the requests RQ managed by the request information collecting module 41, thereby grouping requests RQ associated with the same application instance.

Various techniques may be used by the application determination module 42 for identifying application instances and grouping requests RQ.

In a simple example based on the network layer only, requests RQ having the same IP source and destination addresses (IP address of the client 2 and server 5, respectively) are determined to be associated with the same application instance. However, since a client 2 may runs more than one application instances and an IP address may be common to more than one clients 2 (for example, with NAT), additional information is used in other embodiments.

For example, in case the requests RQ use SCAP, a flow is identified with a client IP and a unique (per client IP) request ID, and the transport layer contains a range of content on a server 5, and an accompanied deadline. The application determination module 42 may determine requests RQ associated with the same application instance in function of the content address ranges and the related timings included in the requests RQ, and description data 43 describing the content stored on the server 5. For example, the description data 43 describe that a video manifest file for a specific video has a specific address range in the server 5, and that the video content referenced in that manifest file is located at a specific other address range. If requests RQ from the same client IP address have similar timings but relate to content ranges linked to different contents, the application determining module 42 can determine that two different applications sessions are active.

For UDP/TCP traffic, the application determining module 42 may look into the flows and do deep packet inspection. For example, in a packet contains an HTTP request with an URL, and the description data 43 describes the content corresponding to the URLs and their parameters and timings, the application determining module 42 may group requests RQ associated with the same application instance in function of the ULR and the description data 43.

In other words, the application determining module 42 has SCAP ranges or HTTP URLs and timing rules to identify the application instances. A detailed example is described below.

In this example, the address of content is expressed in the format <server_IP>:<content_start_address>∼<content_size>, and with timing in for instance a request as follows :
<server_IP>:<content_start_address>∼<content_size>@<start_deadli ne>-<end_deadline>.

Content addresses and sizes are in bytes, deadlines and time are in milliseconds. The format used to identify a client is: <client_IP>;<request_id>.

In this example, the description data 43 specify that:

the manifest file is mapped to address range 10.100.6.13: 28211680175~891,
the video qualities are mapped to 10.100.6.13:28000000000~145710952 for highest quality, 10.100.6.13:28145710952~47977996 for medium quality and 10.100.6.13:28193688948~18677872 for lowest quality.

The following requests RQ can all be attributed to the same application instance:
at 2000123: New request from 10.100.2.118;23345 for 10.100.6.13:28211680175∼891 @100-200
   loading of manifest file
at 2000196: New request from 10.100.2.118;23346 for 10.100.6.13:28000000000∼145710952@100-600000
   loading of highest quality
at 2033456: New request from 10.100.2.118;23348 for 10.100.6.13:28013337260~1452@21659-21663
   retransmission of a lost packet
at 2065935: New request from 10.100.2.118;23349 for 10.100.6.13:28026361339~14520@42810-42846
   retransmission of loss-burst of 10 packets
at 2121543: Updated request from 10.100.2.118;23346 for 10.100.6.13:28048612816~24195329@79022-178653
   update to stop loading the highest quality at half the movie
at 2121543: New request from 10.100.2.118;23353 for 10.100.6.13:28169699950~23988998@178653-478653
   load second half in medium quality
at 2402944: Updated request from 10.100.2.118;23353 for 10.100.6.13:28189450892~4238056@100-53450
   user jumped to last 53 seconds of movie

In addition, the application determining module 42 may determine at least one state associated with an application instance, in function of the requests RQ. A state may specify for example the duration of transmission of a flow without interruption, the number of interruptions of transmission of a flow during a predetermined period, whether a flow relates to paid content...

The controlling module 44 is responsible for selecting at least one application instance that may be impacted in case of overload at the content delivery device 3.

In case the content delivery device 3 is overloaded or the scheduler 34 predict an overload, the content delivery device 3 sends an overload indication message M2 to the controlling device 4. In response to the overload indication message M2, the overload controlling module 44 selects at least one application instance that may be impacted and transmits a instruction message M3 specifying the requests RQ associated with the selected application instance to the content delivery device 3. For example, in SCAP wherein the requests RQ include a source IP address and a request ID, the instruction message M3 lists the pairs (source IP address, request ID) of the selected requests RQ.

Predefined rules may be used for selecting the impacted application instances. For example:
- If a video session has been played out for more than 10 minutes without any freezing, it is very likely that the user can tolerate a freeze. So this can be a candidate.
- If a video session's playback has been interrupted 10 times within the past 2 minutes, it is very likely that the user will abandon it in near future. So this video session can be a candidate.
- If a video session is very likely to always experience problem and potential freeze for the next 5 minutes, it can be a candidate as well.

When it receives the instruction message M3, the content delivery device 3 impacts the responses (the flows) associated with the requests RQ specified in the instruction message M3.

In the system 1, requests RQ are grouped by application instances and, in case of overload, one or more application instances are selected and the corresponding responses or flows are impacted. Accordingly, non-selected application instances are not impacted and quality of experience is improved for the non-selected application instances. Moreover, by appropriate selection of the impacted application instances, the global quality of experience of all the users may be satisfactory.

**Figure 2** is a flowchart of a method for transmission of content, executed by the content delivery device 3.

When the content delivery device 3 receives a request RQ from a client 5 (step S1), it sends a request information message M1 to the controlling device 4 (step S2). The request information message M1 is for example a copy of the request RQ, or a message containing the relevant data of the request RQ in another format. As explained previously, in some embodiments, the content delivery device 3 does not report all the received requests RQ to the controlling device 4.

Then, the content delivery device 3 processes the request RQ (step S3). As discussed previously, processing the request RQ may include retrieving the requested content from the cache 33 and/or the server 5, and sending the response Resp to the client 2.

In case the content delivery device 3 is overloaded or the scheduler 34 predicts an overload (step S4), the content delivery device 3 sends an overload indication message M2 to the controlling device 4 (Step S5). Accordingly, the content delivery device 3 receives an instruction message M3 specifying a list of the requests RQ, and impacts the flows (the responses Resp) associated with the requests RQ of the list (Step S6).

**Figure 3** is a flowchart of a method for controlling the content delivery device 3, executed by the controlling device 4.

When the controlling device 4 receives a request information message M1 associated with a request RQ from the control delivery device 3 (Step T1), it determines an application instances A associated with the request RQ (Step T2): A = F(M1). As explained above, the application instance determining module 42 may use description data 43 for this determination. This has the consequence of grouping the requests RQ, and the corresponding responses or flows, associated with the same application instance.

When the controlling device 4 receives an overload indication message M2 from the control delivery device 3 (Step T3), it selects one or more application instances that should be impacted (Step T4), and sends the corresponding instruction message M3 to the content delivery device 3 (Step T5).

**Figure 4** is a structural view of a communication device, which may be the content delivery device 3 or the controlling device 4. The communication device comprises a processor 10 and a memory 11. The memory 11 stores a computer program P which, when executed by the processor 10, cause the content delivery device 3, respectively the controlling device 4, to execute the method described above with reference to Figure 2, respectively Figure 3.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for controlling a content delivery device (3), executed by a controlling device (4), comprising:
- receiving (T1) at least one request information message (M1) representative of requests (RQ) for content received by the content delivery device (3),
- for at least some of the requests (RQ), determining (T2) application instances (A) associated with the requests, thereby grouping requests associated with the same application instance, and
- in response to an overload indication message (M2) received (T3) from the content delivery device, selecting (T4) at least one application instance and sending (T5), to the content delivery device, a instruction message (M3) specifying the requests associated with the selected application instance.

2. Method according to claim 1, wherein a request (RQ) specifies a content range, the application instance associated with said request being determined in function of the specified content range and description data (43) describing the content stored on a server.

3. Method according to claim 1 or 2, wherein a request (RQ) specifies a timing constrain, the application instance associated with said request being determined in function of the specified timing constrain.

4. Method according to one of claims 2 and 3, wherein said content range and/or said timing constrain is specified in a layer 4 header.

5. Method according to one of claims 2 and 3, wherein said content range and/or said timing constrain is specified in a URL.

6. Method according to one of claims 1 to 5, wherein selecting at least one application instance comprises selecting in function of the durations of non-interrupted transmission of flows associated with said application instances.

7. Method according to one of claims 1 to 6, wherein selecting at least one application instance comprises selecting in function of the number of transmission interruptions of flows associated with said application instances.

8. Computer program (P) comprising instructions for performing the method according to one of claims 1 to 7 when said instructions are executed by a computer.

9. Control device (4) for controlling a content delivery device (3), comprising:
- a request information collecting module (41) for receiving at least one request information message (M1) representative of requests for content received by the content delivery device,
- an application determining module (42) for, for at least some of the requests, determining application instances associated with the requests, thereby grouping requests associated with the same application instance, and
- a overload control module (44) for, in response to an overload indication message (M2) received from the content delivery device, selecting at least one application instance and sending, to the content delivery device, a instruction message (M3) specifying the requests associated with the selected application instance.

10. Method for transmission of content, executed by a content delivery device (3), comprising:
- receiving (S1) requests (RQ) for content from clients (2),
- sending (S2) at least one request information message (M1) representative of received requests (RQ) to a controlling device (4),
- in case of determining or predicting (S4) insufficient resources for processing the requests, sending (S5) a overload indication message (M2) to the controlling device,
- receiving (S6), from the controlling device, an instruction message (M3) specifying a list of requests,
- limiting the bandwidth of or stopping response flows associated with the requests of said list.

11. Computer program (P) comprising instructions for performing the method according to claim 10 when said instructions are executed by a computer.

12. Content delivery device (3) comprising:
- means for receiving requests (RQ) for content from clients (2),
- means for sending at least one request information message (M1) representative of received requests (RQ) to a controlling device (4),
- means for, in case of determining or predicting insufficient resources for processing the requests, sending a overload indication message (M2) to the controlling device,
- means for receiving, from the controlling device, an instruction message (M3) specifying a list of requests,
- means for limiting the bandwidth of or stopping response flows associated with the requests of said list.

13. System (1) comprising a content delivery device (3) according to claim 12 and a controlling device (4) according to claim 9.
